# EUROPEAN PATENT APPLICATION

(11) **EP 4 790 235 A1**
(43) Date of publication of application: **12.08.2026**
(21) Application number: 26150194.4
(22) Date of filing: 05.01.2026
(51) Int. Cl.: F01D 5/14

(54) **AIRFOIL AND GAS TURBINE INCLUDING SAME**

(30) Priority: 04.02.2025 KR 20250013604
(71) Applicant: Doosan Enerbility Co., Ltd., Seongsan-gu Changwon-si, Gyeongsangnam-do 51711 (KR)
(72) Inventor: PARK, In Hyung, 08029 Seoul (KR)
(74) Representative: Ter Meer Steinmeister & Partner

(57) **Abstract**

Proposed is an airfoil (2000_1, 2000_2, 2000_3, 2000_4) including a suction surface (2400), a pressure surface (2300), a leading edge (2100), a trailing edge (2200), and a through hole (2500, 2500_2, 2500_3, 2500_4). The suction surface (2400) protrudes with an outward convex curved surface. The pressure surface (2300) is formed on a surface opposite to the suction surface and has a curved surface recessed concavely. The leading edge (2100) is arranged at an upper stream of an air flow and formed where front ends of the pressure surface (2300) and the suction surface (2400) are joined. The trailing edge (2200) is arranged at a lower stream of the air flow and formed where rear ends of the pressure surface (2300) and the suction (2400) surface are joined. The through hole (2500, 2500_2, 2500_3, 2500_4) is formed through the airfoil (2000_1, 2000_2, 2000_3, 2000_4) in a direction from the pressure surface (2300) to the suction surface (2400).

## Description

### BACKGROUND OF THE INVENTION

### Field of the Invention

The present disclosure relates to an airfoil and a gas turbine including the same.

### Description of the Related Art

A turbine is a mechanical device that utilizes a flow of compressible fluid, such as steam or gas, to generate rotational force through impulse or reaction, and includes a steam turbine that utilizes steam and a gas turbine that utilizes high temperature combustion gas.

Among them, the gas turbine is primarily composed of a compressor, a combustor, and a turbine. The compressor is equipped with an air inlet to introduce air, and in a compressor housing, a plurality of compressor vanes and compressor blades are alternately arranged.

The combustor supplies fuel to compressed air from the compressor and burns it with a burner, thereby generating high temperature and high pressure combustion gas.

The turbine includes the plurality of turbine vanes and the turbine blades that are alternately arranged in a turbine casing. Furthermore, a rotor is arranged to pass through the central portions of the compressor, the combustor, the turbine, and an exhaust chamber.

The rotor is rotatably supported at both ends thereof by bearings. Furthermore, a plurality of discs is fixed to the rotor with each blade connected thereto, and a drive shaft of a generator, etc. is connected to an end of the exhaust chamber.

The gas turbine, which does not include reciprocating motion devices like pistons in four-stroke engines, has no friction points, such as those between the piston and the cylinder, resulting in extremely low lubricant consumption, significantly reduced vibration amplitude, which is characteristic of the reciprocating motion devices, and enabling high-speed operation.

To briefly describe the operation of the gas turbine, air compressed in the compressor is mixed with fuel and burned to produce high temperature combustion gas, which is then injected toward the turbine. The injected combustion gas generates rotational force as it passes through the turbine vanes and turbine blades, thereby rotating the rotor.

Documents of Related Art/ Patent Document KR Pat. Appl. Publication No. 10-2024-0095996

### SUMMARY OF THE INVENTION

An objective of the present disclosure is to provide an airfoil and a gas turbine including the same, the airfoil being capable of improving the compression efficiency of a compressor.

According to an embodiment of the present disclosure, there is provided an airfoil, which includes a suction surface, a pressure surface, a leading edge, a trailing edge, and a through hole. The suction surface may have an outwardly convex curved surface. The pressure surface may be disposed opposite the suction surface and have a curved surface recessed concavely toward the suction surface. The leading edge may be disposed upstream with respect to a direction of airflow and formed where front ends of the pressure surface and the suction surface are joined. The trailing edge may be disposed downstream with respect to the direction of the airflow and formed where rear ends of the pressure surface and the suction surface are joined. The through hole may extend through the airfoil from the pressure surface to the suction surface.

In the airfoil according to the embodiment of the present disclosure, the through hole may be a tip hole formed on an upper portion of the pressure surface or a hub hole formed on a lower portion of the pressure surface.

In the airfoil according to the embodiment of the present disclosure, the through hole may have a linear form or a curved form.

In the airfoil according to the embodiment of the present disclosure, the through hole may be formed in a diagonal direction having a preset angle relative to a tangential direction of the pressure surface.

In the airfoil according to the embodiment of the present disclosure, the preset angle may range from 1° to 60°.

In the airfoil according to the embodiment of the present disclosure, the through hole may be formed with a sectional area gradually decreasing in a direction from the pressure surface to the suction surface.

In the airfoil according to the embodiment of the present disclosure, the through hole may include a first path that may extend from an inlet of the through hole and terminates within the airfoil before reaching an outlet of the through hole, and a second path that may bend at and extend from an end of the first path to the outlet of the through hole.

In the airfoil according to the embodiment of the present disclosure, the first path may be formed in a diagonal direction having a first angle preset relative to the pressure surface, and the second path may be formed in a diagonal direction having a second angle less than the first angle.

In the airfoil according to the embodiment of the present disclosure, the through hole may include a third path connecting an inlet of the through hole to a first outlet, and a fourth path branching from one position of the third path to a second outlet.

In the airfoil according to the embodiment of the present disclosure, the second outlet may be formed closer to the trailing edge than the first outlet.

According to an embodiment of the present disclosure, there is provided a gas turbine, which includes a compressor, a combustor, and a turbine. The compressor may be configured to compress inflow air, and may include multiple stages of compressor blades installed radially and a compressor vane installed between the multiple stages of compressor blades. The combustor may be configured to mix and burn air compressed by the compressor with fuel. The turbine may be configured to generate power with gas burned by the combustor. At least one of the compressor blade and the compressor vane may include an airfoil. The airfoil may include a suction surface, a pressure surface, a leading edge, a trailing edge, and a through hole. The suction surface may have an outwardly convex curved surface. The pressure surface may be disposed opposite the suction surface and have a curved surface recessed concavely toward the suction surface. The leading edge may be disposed upstream with respect to a direction of airflow and formed where front ends of the pressure surface and the suction surface are joined. The trailing edge may be disposed downstream with respect to the direction of the airflow and formed where rear ends of the pressure surface and the suction surface are joined. The through hole may extend through the airfoil from the pressure surface to the suction surface.

In the gas turbine according to the embodiment of the present disclosure, the through hole may be a tip hole formed on an upper portion of the pressure surface or a hub hole formed on a lower portion of the pressure surface.

In the gas turbine according to the embodiment of the present disclosure, the through hole may have a linear form or a curved form.

In the gas turbine according to the embodiment of the present disclosure, the through hole may be formed in a diagonal direction having a preset angle relative to a tangential direction of the pressure surface.

In the gas turbine according to the embodiment of the present disclosure, the preset angle may range from 10° to 60°.

In the gas turbine according to the embodiment of the present disclosure, the through hole may be formed with a sectional area gradually decreasing in a direction from the pressure surface to the suction surface.

In the gas turbine according to the embodiment of the present disclosure, the through hole may include a first path that may extend from an inlet of the through hole and terminates within the airfoil before reaching an outlet of the through hole, and a second path that may bend at and extend from an end of the first path to the outlet of the through hole.

In the gas turbine according to the embodiment of the present disclosure, the first path may be formed in a diagonal direction having a first angle preset relative to the pressure surface, and the second path may be formed in a diagonal direction having a second angle less than the first angle.

In the gas turbine according to the embodiment of the present disclosure, the through hole may include a third path formed to connect an inlet of the through hole to a first outlet, and a fourth path branching from one position of the third path to a second outlet.

In the gas turbine according to the embodiment of the present disclosure, the second outlet may be formed closer to the trailing edge than the first outlet.

According to the embodiment of the present disclosure, when the airfoil is applied to the compressor blade or the compressor vane, surge margin and polytropic efficiency of the compressor increase, thereby improving compression efficiency of the compressor.

### BRIEF DESCRIPTION OF THE DRAWINGS

FIG.1 a perspective view showing a partially cut gas turbine of an embodiment of the disclosure.
FIG.2 sectional view of a schematic structure of the gas turbine of the embodiment.
FIG. 3 is a perspective view showing an airfoil according to a first embodiment of the present disclosure, the view showing the airfoil used in a compressor blade.
FIG. 4 is a side view showing the airfoil according to the first embodiment of the present disclosure, the view showing the airfoil used in a compressor vane.
FIG. 5 is a top view showing a section A-A' of FIG. 3.
FIG. 6 is a top view showing a section B-B' of FIG. 3.
FIG. 7 is a view showing the flow separation phenomenon caused by an airfoil of the related art.
FIG. 8 is a view showing the flow separation phenomenon caused by the airfoil according to the first embodiment of the present disclosure.
FIG. 9 is a view showing a flow-to-compression ratio.
FIG. 10 is a view showing a flow-to-polytropic efficiency.
FIG. 11 is a view showing an airfoil according to a second embodiment of the present disclosure.
FIG. 12 is a view showing an airfoil according to a third embodiment of the present disclosure.
FIG. 13 is a view showing an airfoil according to a fourth embodiment of the present disclosure.

### DETAILED DESCRIPTION OF THE DISCLOSURE

The present disclosure may be variously modified and may have various embodiments, so examples of which are illustrated and will be described in detail in the detailed description. However, it should be understood that the present disclosure is not limited to the embodiments which will be described hereinbelow, but various modifications, equivalents, additions and substitutions are possible, without departing from the scope of the present disclosure.

The terminology used herein is for the purpose of describing particular embodiments only and is not intended to be limiting. As used herein, the singular forms "a", "an", and "the" are intended to include the plural forms as well, unless the context clearly indicates otherwise. It will be further understood that the terms "comprise", "include", "have", etc., when used in this specification, specify the presence of stated features, integers, steps, operations, elements, components, and/or combinations of them but do not preclude the presence or addition of one or more other features, integers, steps, operations, elements, components, and/or combinations thereof.

Hereinbelow, exemplary embodiments of the present disclosure will be described in detail with reference to the accompanying drawings. When inserting reference numerals into the components in the respective drawings, although the same components are illustrated in the different drawings, they are described to have the same reference numeral as far as possible. Furthermore, detailed descriptions of known functions and configurations which are deemed to make the gist of the present disclosure obscure will be omitted. For the same reason, some components in the accompanying drawings may be exaggerated, omitted, or simplified.

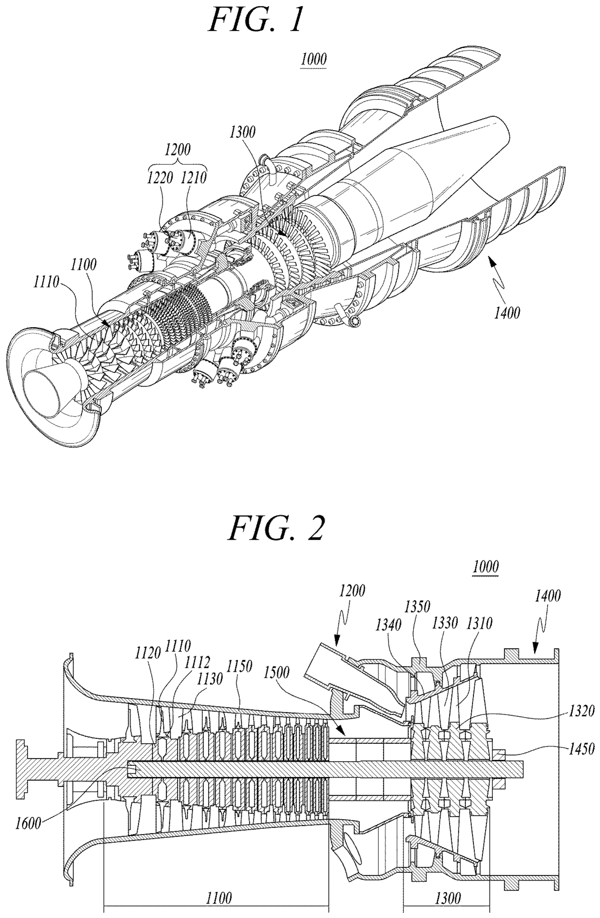

FIG. 1 is a partially cut-perspective view of a gas turbine according to an embodiment of the present disclosure. FIG. 2 is a sectional view showing an inner structure of the gas turbine according to the embodiment of the present disclosure.

As shown in FIG. 1, according to the embodiment of the present disclosure, a gas turbine 1000 includes a compressor 1100, a combustor 1200, and a turbine 1300. The compressor 1100 includes a plurality of compressor blades 1110 installed radially. The compressor 1100 rotates the compressor blades 1110, and air is compressed and moved due to the rotation of the compressor blades 1110. The size and installation angle of the compressor blades 1110 may vary depending on each installation position. In the first embodiment, the compressor 1100 is directly or indirectly connected to the turbine 1300 and may receive a portion of the power generated by the turbine 1300 to rotate the compressor blades 1110.

The air compressed by the compressor 1100 may move to the combustor 1200. The combustor 1200 includes a plurality of combustion chambers 1210 arranged in a ring shape, and a plurality of fuel nozzle modules 1220.

As shown in FIG. 2, according to the embodiment of the present disclosure, the gas turbine 1000 includes a housing 1010, and a diffuser 1400 is provided behind the housing 1010 to discharge combustion gas passing through the turbine. Furthermore, the combustor 1200 is arranged at a front portion of the diffuser 1400 to receive and burn the compressed air.

Based on a front direction of air, the compressor 1100 is located at an upper stream of the housing 1010, and the turbine 1300 is located at a lower stream of the housing 1010. Furthermore, a torque tube 1500 is arranged between the compressor 1100 and the turbine 1300 as a torque transmitting member that transmits the rotational torque generated by the turbine 1300 to the compressor 1100.

The compressor 1100 includes a plurality of compressor rotor discs 1120 (e.g., 14 sheets), and each of the compressor rotor discs 1120 is fastened to each other with a tie rod 1600 so as not to be separated from each other in an axial direction.

Specifically, each of the compressor rotor discs 1120 is aligned in an axial direction with the tie rod 1600 of the rotating shaft passing through the central portion of the compressor rotor discs 1120. Herein, close compressor rotor discs 1120 are arranged to prevent relative rotation thereof with opposite surfaces pressed by the tie rod 1600.

The plurality of compressor blades 1110 is coupled to the outer circumferential surfaces of the compressor rotor discs 1120. Each compressor blade 1110 includes a dovetail member 1112 and is fastened to each compressor rotor disc 1120.

A compressor vane 1130 that is securely arranged in the housing is located between the compressor rotor discs 1120. The compressor vane 1130 is secured against rotation, unlike the rotor discs, and serves to align the flow of compressed air passing through the compressor blades 1110 of the rotor discs 1120 and guide the air to the compressor blades 1110 of the rotor discs located at the lower stream.

A fastening method of the dovetail member 1112 is a tangential type or an axial type. The fastening method may be selected depending on the required structure of the common gas turbine, and may have a dovetail shape or a fir-tree shape, which is commonly known. In some cases, other fastening devices, such as keys or bolts, may be used to secure the blades to the rotor disc.

The tie rod 1600 is arranged to pass through the plurality of compressor rotor discs 1120 and a plurality of turbine rotor discs 1320, and the tie rod 1600 may include one or a plurality of tie rods. A first end of the tie rod 1600 is fastened to an inner portion of the compressor rotor disc located at the uppermost stream, and a second end of the tie rod 1600 is fastened with a fixing nut 1450.

The shape of the tie rod 1600 may have various structures according to the gas turbine, and is not necessarily limited to the shape shown in FIG. 2. In other words, as shown in the drawing, one tie rod may be shaped to pass through the center portion of the rotor discs, a plurality of tie rods may be arranged circumferentially, and mixed use thereof is possible.

Although not shown in the drawings, the compressor of the gas turbine may have a vane at a position downstream of the diffuser, the vane serving as a turning vane to adjust a flow angle of a fluid to a designed flow angle, the fluid entering an entrance of the combustor after increasing the pressure thereof, and this is called a deswirler.

The combustor 1200 mixes the introduced compressed air with fuel, and burns it to generate high temperature and high pressure gas with high energy, and increases the temperature of the combustion gas to the heat resistance limit that the combustor and the turbine components can withstand by a uniform pressure combustion process.

The combustor constituting the combustion system of the gas turbine may include a plurality of combustors arranged in a housing shaped in a cell, and includes a burner including a fuel injection nozzle, etc., a combustor liner forming the combustion chamber, and a transition piece serving as a connecting member between the combustor and the turbine.

Specifically, the liner provides a combustion space in which fuel injected from the fuel injection nozzle is mixed with compressed air from the compressor and burned. The liner may include a flame container, providing a combustion space in which fuel mixed with air is burned, and a flow sleeve, providing an annular space. Furthermore, a fuel nozzle is coupled to a front end of the liner, and an ignition plug is coupled to a side wall of the liner.

Meanwhile, a transition piece is connected to a rear end of the liner to transfer combustion gas burned by the ignition plug, toward the turbine. An outer wall of the transition piece is cooled by the compressed air supplied from the compressor to prevent damage caused by the high temperature of the combustion gas.

To this end, the transition piece includes holes for cooling to inject air inward, and compressed air cools an inner main body through the holes and then flows toward the liner.

The cooling air that has cooled the transition piece flows in the annular space of the liner, and at the outer wall of the liner, the compressed air is supplied from the outside space of the flow sleeve through the cooling holes of the flow sleeve toward the cooling air, causing a collision between them.

Meanwhile, the combustion gas from the combustor is supplied to the turbine 1300. The combustion gas expands and collides the rotating blades of the turbine, generating a reaction force that produces rotational torque. The rotational torque is transmitted to the compressor through the torque tube 1500, and any power exceeding that required to drive the compressor is used to drive the generator, etc.

The turbine 1300 has a structure fundamentally similar to the structure of the compressor. In other words, the turbine 1300 includes also a plurality of turbine rotor discs 1320 similar to the compressor rotor discs of the compressor. Therefore, each turbine rotor disc 1320 includes also a plurality of turbine blades 1310 arranged radially. The turbine blades 1310 may also be coupled to the turbine rotor discs 1320 using a dovetail method, etc. Furthermore, a turbine vane 1330 is provided between the blades 1310 of each turbine rotor disc 1320 and fixed to a turbine casing 1350 through a turbine vane carrier 1340, and controls the flow direction of the combustion gas that has passed through the blades. The turbine vane carrier 1340 is equipped with at least one turbine vane 1330 and formed to be connected to the turbine casing 1350.

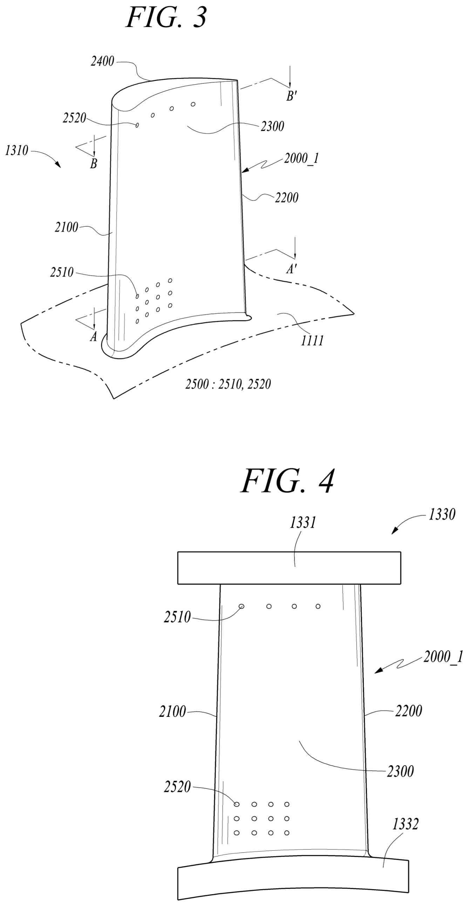

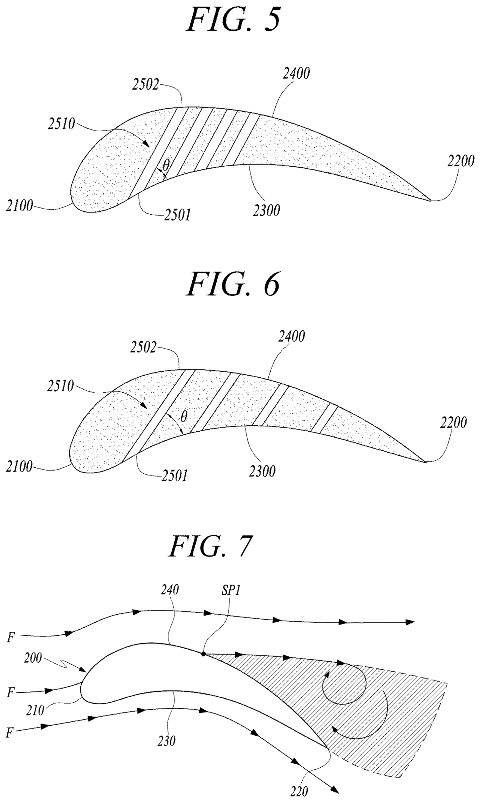

FIGS. 3 and 4 are views showing airfoils according to the first embodiment of the present disclosure. FIG. 3 is a perspective view showing an airfoil applied to a compressor blade, and FIG. 4 is a side view showing an airfoil applied to a compressor vane. FIG. 5 is a top view showing a section A-A' of FIG. 3, and FIG. 6 is a top view showing a section B-B' of FIG. 3.

Referring to FIGS. 3 and 4, according to the first embodiment of the present disclosure, an airfoil 2000_1 may include a curved plate having a wing shape, the wing shape being optimized according to the specifications of the gas turbine 1000.

Throughout the specification, the direction along which the rotor, to which rotor disks and the turbine/compressor blades are coupled, extends is referred to as an axial direction. The compressed air in the compressor and the combustion gas in the turbine section generally flows along the axial direction. The upstream side along the axial direction may be referred to as front side, and the downstream side along the axial direction may be referred to as the rear side.

The direction the blades rotate around the rotor is referred to as the circumferential direction.

The direction from the rotor toward the blades may be referred to as a radial direction. In a blade, the direction from the platform towards the tip of an airfoil may be referred to as an upper side or a radially outward direction, and the opposite direction may be referred to as a lower side or a radially inward direction. Also, in a vane, an airfoil of the vane may be disposed between an upper vane platform which is coupled with the casing and an lower vane platform.

The airfoil 2000_1 may be applied to at least one of the compressor blades 1110 and the compressor vane 1130. The compressor blades 1110 and the turbine blades 1310, and the compressor vane 1130 and the turbine vane 1330 may have similar exterior shapes, but different inner structures. For example, a cavity and a cooling passage may be formed in the airfoil applied to both the turbine blades 1310 and the turbine vane 1330 to prevent the airfoil from overheating due to combustion gas. In contrast, since the airfoil 2000_1 applied to both the compressor blades 1110 and the compressor vane 1130 is not exposed to combustion gas and thus does not overheat, a separate cooling passage is not formed in the airfoil 2000_1.

The airfoil 2000_1 includes a suction surface 2400 protruding with an outward convex curved surface, and a pressure surface 2300 that is a curved surface recessed concavely toward the suction surface 2400.

The airfoil 2000_1 includes a leading edge 2100 and a trailing edge 2200. The leading edge 2100 is disposed upstream with respect to a direction of air flow and is formed at a junction where the front ends of the pressure surface 2300 and the suction surface 2400 are joined. The trailing edge 2200 is disposed downstream with respect to the direction of air flow and is formed at a junction where the rear ends of the pressure surface 2300 and the suction surface 2400 are joined.

The airfoil 2000_1 includes at least one through hole 2500 (2510, 2520) extending from the pressure surface 2300_ to the suction surface 2400. Each through hole 2500 (2510, 2520) may extend along a linear path or a curved path. The through hole 2500 may be referred to as a through channel or a through passage.

Among the at least one through hole 2500, a first through hole 2510 formed at a lower portion of the pressure surface 2300 may be referred to as a hub hole, and a second through hole 2520 formed at an upper portion of the pressure surface 2300 may be referred to as a tip hole. The terms "first through hole" and "second through hole" are used to distinguish the through holes based on their respective locations where the holes are formed, and the through holes may have similar shapes and functions. Although a plurality of through holes 2500 may be provided, the through hole is described in the singular for convenience of explanation.

When the airfoil 2000_1 is an element of the compressor blade 1110, the first through hole 2510 may be formed close to a platform 1111 coupled to the lower portion of the airfoil 2000_1 (that is, at a position relatively radially inward side), and the second through hole 2520 may be formed at the upper portion of the airfoil 2000_1 , and adjacent to a compressor housing 1150 (that is, at a position relatively radially outward side).

When the airfoil 2000_1 is a component of the compressor vane 1130, the first through hole 2510 may be formed close to an upper vane platform 1331 formed at the compressor housing 1150 (that is, at a position relatively radially outward side), and the second through hole 2520 may be formed close to a lower vane platform 1332 (that is, at a position relatively radially inward side).

Hereinbelow, the airfoil 2000_1 applied to the compressor blades 1110 will be illustrated. Of course, the airfoil 2000_1 described below may be applied to the compressor vane 1130 in a substantially equal manner.

As shown in FIGS. 5 and 6, the through hole 2500 is formed and extends through the airfoil 2000_1 in a direction from the pressure surface 2300 to the suction surface 2400 by penetrating the airfoil from the pressure surface 2300 to the suction surface 2400. In an airfoil applied to the turbine blades 1310 and the turbine vane 1330, internal cavities and cooling passages are provided, and therefore such a through hole is not formed. In contrast, the airfoil 2000_1 applied to the compressor blades 1110 and the compressor vane 1130 has a filled internal structure, and accordingly, the through hole 2500 may be formed to extend through the airfoil 2000_1 from the pressure surface 2300 to the suction surface 2400 of the airfoil 2000_1.

The through hole 2500 may be formed in a diagonal direction at a preset angle θ relative to the tangential direction of the pressure surface 2300, such that, an inlet 2501 of the through hole 2500 is located close to a leading edge 2100, and an outlet 2502 of the through hole 2500 is located close to a trailing edge 2200.

Air flowing into the inlet 2510 may flow exclusively to the outlet 2502, and air exiting through the outlet 2502 may be supplied exclusively from the inlet 2510.

The through hole 2500 may be extended from the pressure surface 2300 to the suction surface 2400 while remaining at a constant radial height.

According to an embodiment, when the through hole 2500 is provided in a plural, the plurality of through holes 2500 may be disposed at a same radial height.

In an embodiment, when the airfoil 2000_1 is a component of the compressor blade 1110, the first through hole 2510, which is located relatively inward, may have more through holes than the second through hole 2520.

In an embodiment, when the airfoil 2000_1 is a component of the compressor vane 1130, the second through hole 2520 may have more through holes than the first through hole 2510.

A sectional shape of the through hole 2500 is not specifically limited to a circular shape, a polygonal shape, and is preferably an elliptical shape. When the sectional shape is elliptical, the flow separation reduction efficiency may increase. The sectional shape of the through hole 2500 is defined as a shape of a cross-section taken perpendicular to an extension direction of the through hole 2500.

As the inclination angle θ of the through hole 2500 deviates from a main flow direction based on a relative speed, a low-speed area may be enlarged. Therefore, the flow separation reduction effect and the surge margin improvement effect may be reduced.

Although the inclination angle θ of the through hole 2500 may be designed based on blade conditions, the inclination angle θ of the through hole 2500 is preferably set to an angle between 10° and 60° relative to the tangential direction of the pressure surface 2300.

When the inclination angle θ is less than 10°, the outlet 2502 of the through hole 2500 is positioned excessively close to the trailing edge 2200 to reduce the surge margin improvement effect. When the inclination angle θ is greater than 60°, the flow separation reduction effect is diminished, thereby relatively reducing the pressure efficiency improvement effect.

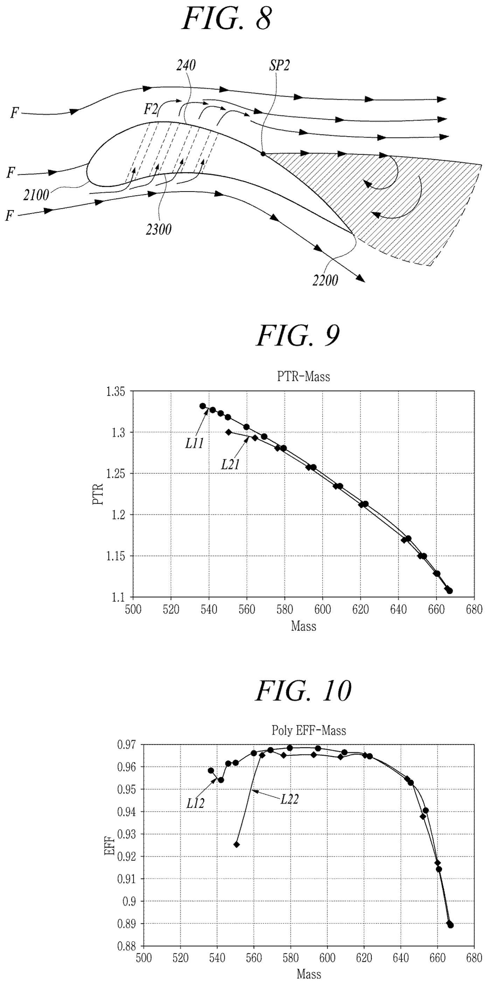

FIG. 7 is a view showing the flow separation phenomenon occurring in an airfoil according to the related art. FIG. 8 is a view showing the flow separation phenomenon occurring in an airfoil according to the first embodiment of the present disclosure.

Flow separation occurs when a fluid flowing along an airfoil surface is separated from the airfoil at a highly viscous boundary layer, without contacting the airfoil, and flow separation negatively impacts the performance of the airfoil and the efficiency of the gas turbine.

According to the related art shown in FIG. 7, an airfoil 200 is an airfoil without the through hole 2500.

With the airfoil 200 according to the related art, as shown in FIG. 7, an airflow F separates from the leading edge 210, and flow separation occurs at a separation point SP1 on the suction surface 240, thereby generating a vortex that causes pressure loss and an increase in drag.

With the airfoil 2000_1 according to the first embodiment of the present disclosure, as shown in FIG. 8, an air flow F2 is supplied through the through hole 2500 from the pressure surface 2300 to the suction surface 2400, such that a separation point SP2 is formed closer to the trailing edge 2200 than a separation point of the conventional airfoil 200, thereby by reducing flow separation. As a result, compared with the conventional airfoil, pressure loss may be reduced and drag increase may be minimized, thereby improving compression efficiency.

FIG. 9 is a view showing a flow-to-compression ratio. FIG. 10 is a view showing a flow-to-polytropic efficiency.

In FIG. 9, line L11 indicates a flow-to-compression ratio obtained by the compressor equipped with the compressor blades 1110 with the airfoil 2000_1 according to the first embodiment of the present disclosure, and line L21 is a flow-to-compression ratio obtained by the compressor equipped with the compressor blade with the airfoil 200 according to the related art.

In FIG. 9, the horizontal axis indicates a flow rate during a reference time in the compressor of the same size, and the vertical axis indicates a compression ratio at the corresponding flow rate.

Referring to FIG. 9, based on a flow rate of 580 m³/s (hereinbelow, unit omitted), when a flow rate flows equal to or greater than 580, L11 and L21 have substantially identical trajectories, and no significant difference in compression ratio is observed. In contrast, when a flow rate flows less than 580, a substantial difference in the compression ratio between a compression ratio L11 and a compression ratio L21 is observed. This indicates that using the airfoil 2000_1 of the present disclosure enables the achievement of a relatively high compression ratio at a low flow rate.

Furthermore, since a trajectory of L21 starts at a flow rate of 552 or higher and a trajectory of L11 starts at a lower flow rate of 536, it is confirmed that the surge margin of the airfoil 2000_1 is higher than that of the related art.

Meanwhile, a surge is a phenomenon where airflow within the compressor reverses or becomes unstable, and a surge margin is set to prevent mechanical damage or performance degradation caused by a surge. In other words, a suction margin serves as a critical design and operating criterion indicating the range in which the compressor can operate stably.

In FIG. 10, line L12 represents a flow-to-polytropic efficiency of a compressor equipped with the compressor blades 1110 including the airfoil 2000_1 according to the first embodiment of the present disclosure, and line L22 represents a flow-to-polytropic efficiency of a compressor equipped with the compressor blade including the airfoil 200 according to the related art.

In FIG. 10, the horizontal axis indicates a flow rate that flows through the compressor of the same size during a reference time period, and the vertical axis indicates a polytropic efficiency at that flow rate.

The polytropic efficiency is defined by equation (1). Equation (1): ${η}_{p} - \frac{\begin{matrix}Compression work required for \\ ideal polytropic process\end{matrix}}{\begin{matrix}Compression work done by \\ actual compressor\end{matrix}}$

The "ideal polytropic process" is an ideal quasi-static process where temperature changes occur very gradually, and the "compression work done by the actual compressor" includes friction in the actual gas flow, specific heat loss, and mechanical loss.

The polytropic efficiency may be calculated by equation (2) based on the pressure ratio in the compressor.${n}_{p} - \frac{n - 1}{n} ⋅ \frac{ln \left(\frac{{P}_{2}}{{P}_{1}}\right)}{ln \left(\frac{{T}_{2}}{{T}_{1}}\right)}$

Herein, n is the polytropic index, P1 is the compressor inlet pressure, P2 is the compressor outlet pressure, T1 is the compressor inlet temperature, and T2 is the compressor outlet temperature.

This means that the higher the polytropic efficiency calculated, the lower the energy loss of the compressor and the better its performance.

Referring to FIG. 10, at a flow rate of 568, when the flow rate is equal to or greater than 568, curves L21 and L22 exhibit substantially identical trajectories, no significant difference in the polytropic efficiency is observed. In contrast, when a flow rate flows less than 568, a substantial difference between L21 and L22 is observed. This indicates that using the airfoil 2000_1 of the present disclosure enables the achievement of a relatively high polytropic efficiency at a low flow rate.

Therefore, when the airfoil 2000_1 of the first embodiment of the present disclosure is applied to the compressor blades 1110 or the compressor vane 1130, surge margin and polytropic efficiency of the compressor 1100 can increase, thereby improving compression efficiency.

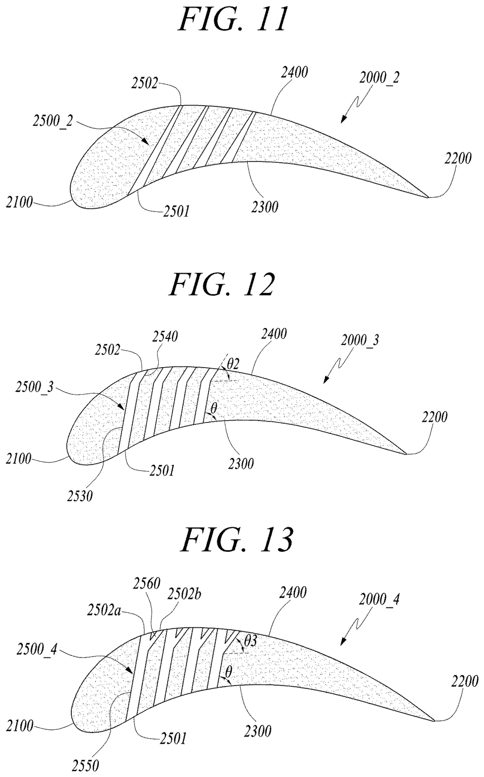

FIG. 11 is a view showing an airfoil according to a second embodiment of the present disclosure. FIG. 12 is a view showing an airfoil according to a third embodiment of the present disclosure. FIG. 13 is a view showing an airfoil according to a fourth embodiment of the present disclosure.

Specifically, FIGS. 11 to 13 are plan views of a section A-A' or B-B' of FIG. 3. In other words, the virtual planes corresponding to the plan view in FIGS. 11 to 13 are defined by a plane perpendicular to a radial direction. In FIGS. 11 to 13, the airfoils 2000_2 to 2000_4 have different shapes in the through hole 2500, but the same components in the remaining part, and repeated descriptions thereof will be omitted.

Referring to FIG. 11, according to the second embodiment of the present disclosure, the through hole 2500_2 of the airfoil 2000_2 extends through the airfoil in a direction from the pressure surface 2300 to the suction surface 2400, and has a cross-sectional area that gradually decreases in the direction from the pressure surface 2300 to the suction surface 2400. According to an embodiment, a diameter of the cross-section of the through hole 2500_2 may gradually decrease from the pressure surface 2300 to the suction surface 2400.

In other words, the inlet 2501 of the through hole 2500_2 formed in the pressure surface 2300 has the greatest area, and the outlet 2502 of the through hole 2500_2 formed in the suction surface 2400 has the smallest area.

When the through hole 2500_2 is formed as shown in the second embodiment, a greater amount of air may flow into the inlet 2501 of the through hole 2500_2 having the larger cross-sectional area. The inflowing air accelerates while passing through the through hole 2500_2 having a gradually reduced cross-sectional area, and is then discharged through the outlet 2502 of the through hole 2500_2, thereby minimizing air head loss and improving compression efficiency.

Referring to FIG. 12, according to the third embodiment of the present disclosure, the through hole 2500_3 of the airfoil 2000_3 may extends through the airfoil in the direction from the pressure surface 2300 to the suction surface 2400, and may include a first path 2530 and a second path 2540.

The first path 2530 extends from the inlet 2501 of the through hole 2500_3 and ends in the airfoil 2000_3 before reaching the outlet 2502. The second path 2540 extends from the end of first path 2530, toward the outlet 2502 of the through hole 2500_3. The outlet 2502 of the through hole 2500_3 is formed closer to the trailing edge 2200 than that of the above-described first embodiment.

The first path 2530 and the second path 2540 may be straight and linear paths, and the second path 250 may bend or be inclined at the end of the first path 2530. According to an embodiment, the first path 2530 and the second path 2540 may be disposed at the same radial height.

An inclination angle of the first path 2530 is formed equal to the inclination angle θ of the through hole 2500 of the first embodiment described above, and an inclination angle θ2 of the second path 2540 is formed less than the inclination angle θ of the first path 2530, such that the second path 2540 is bent from the end of the first path 2530 toward the training edge 2200.

The first path 2530 may be formed to have the sectional area gradually reduced from the pressure surface 2300 to the suction surface 2400, similar to the second embodiment described above.

When the through hole 2500_3 is formed as shown in the third embodiment, air flowing through the inlet 2501 passes through the second path 2540 with the smaller inclination angle θ2 and then is discharged through the outlet 2502. Because the outlet 2502 is formed closer to the trailing edge 2200, a separation position thereof is located closer to the trailing edge 2200 than in the first embodiment described above, thereby further reducing the flow separation phenomenon.

Referring to FIG. 13, according to the fourth embodiment of the present disclosure, the through hole 2500_4 of the airfoil 2000_4 extends through the airfoil in the direction from the pressure surface 2300 to the suction surface 2400, and may include a third path 2550 and a fourth path 2560.

The third path 2550 connects the inlet 2501 of the through hole 2500_4 to a first outlet 2502a, and the fourth path 2560 connects one position along the third path 2550 to a second outlet 2502b.

According to an embodiment, the third path 2550 may extend straight and linear from the inlet 2501 to the first outlet 2502a, and the fourth path 2560 may branch off from one position (i.e., branching position) along the third path 2550 and extend to the second outlet 2502b. The second outlet 2502b may be positioned more downstream than the first outlet 2502a. The third path 2550 and the fourth 256 may be disposed at a same radial height.

An inclination angle of the third path 2550 may be formed equal to the inclination angle θ of the through hole 2500 of the first embodiment described above, and an inclination angle θ3 of the fourth path 2560 may be formed less than the inclination angle θ of the third path 2550. The inclination angle θ3 of the fourth path 2560 may be practically equal to the inclination angle θ2 of the second path 2540.

The second outlet 2502b of the through hole 2500_4 is formed closer to the trailing edge 2200 than the first outlet 2502a.

According to an embodiment, the third path 2550 may be formed to have the sectional area gradually reduced from the pressure surface 2300 to the suction surface 2400, similar to the second embodiment described above. According to an embodiment, the sectional area of the fourth path 2560 may be smaller than the sectional area of the third path 2550.

When the through hole 2500_4 is formed as shown in the fourth embodiment, air flowing through the inlet 2501 branches at the connection point of the third path 2550 and the fourth path 2560 (i.e., the branching point) and a branched air flows through the fourth path 2560. A portion of the branched air is discharged through the outlet 2502 via the fourth path 2560 with the smaller inclination angle θ3. At this point, since the outlet 2502 is formed closer to the trailing edge 2200, a separation position thereof is provided closer to the trailing edge 2200 than that of the first embodiment described above, thereby reducing the flow separation phenomenon.

In the third embodiment, after the first path 2530 is processed near the pressure surface 2300 so that it ends inside the airfoil 2000_3, the second path 2540 is processed near the suction surface 2400, requiring the inconvenience of precisely processing an end position of the first path 2530.

In the fourth embodiment, since the third path 2550 only needs to be processed through the pressure surface 2300 and the suction surface 2400, it is easier to process the fourth embodiment than that of the third embodiment.

Although the preferred embodiments of the present disclosure have been disclosed, those skilled in the art will appreciate that various modifications, additions, substitutions, and deletions of components are possible, without departing from the scope of the present disclosure as disclosed in the accompanying claims, and this is also included within the scope of rights of the present disclosure. Also, it is noted that any one feature of an embodiment of the present disclosure described in the specification may be applied to another embodiment of the present disclosure. Similarly, the present invention encompasses any embodiment that combines features of one embodiment and features of another embodiment.

## Claims

1. An airfoil comprising:
a suction surface (2400) having an outwardly convex curved surface;
a pressure surface (2300) disposed opposite the suction surface and having a curved surface recessed concavely toward the suction surface;
a leading edge (2100) disposed upstream with respect to a direction of airflow and formed where front ends of the pressure surface and the suction surface are joined;
a trailing edge (2200) disposed downstream with respect to the direction of the airflow and formed where rear ends of the pressure surface and the suction surface are joined; and
at least one through hole (2500, 2500_2, 2500_3, 2500_4) extending through the airfoil (2000_1 ~ 2000_4) from the pressure surface to the suction surface.

2. The airfoil of claim 1, wherein the through hole (2500, 2500_2, 2500_3, 2500_4) is a tip hole formed on an upper portion of the pressure surface or a hub hole formed on a lower portion of the pressure surface, wherein the through hole has a linear form or a curved form.

3. The airfoil of claim 1 or claim 2, wherein the through hole (2500, 2500_2, 2500_3, 2500_4) is formed in a diagonal direction having a preset angle relative to a tangential direction of the pressure surface, wherein the preset angle ranges from 1° to 60 °.

4. The airfoil of any one of claim 1 to claim 3, wherein the through hole (2500_2) is formed with a sectional area gradually decreases in a direction from the pressure surface to the suction surface.

5. The airfoil of any one of claim 1 to claim 4, wherein the through hole comprises a first path (2530) that extends from an inlet of the through hole and terminating within the airfoil before reaching an outlet of the through hole, and a second path (2540) bending at and extending from an end of the first path to the outlet of the through hole.

6. The airfoil of any one of claim 1 to claim 5, wherein the first path (2530) is formed in a diagonal direction having a first angle preset relative to the pressure surface, and the second path (2540) is formed in a diagonal direction having a second angle less than the first angle.

7. The airfoil of any one of claim 1 to claim 6, wherein the through hole comprises a third path (2550) connecting an inlet (2501) of the through hole to a first outlet (2502a), and a fourth path (2560) branching from one position of the third path to a second outlet (2502b).

8. The airfoil of any one of claim 1 to claim 7, wherein the second outlet (2502b) is formed closer to the trailing edge than the first outlet (2502a).

9. A gas turbine comprising:
a compressor (1100) configured to compress inflow air, and comprising multiple stages of compressor blades installed radially and a compressor vane installed between the multiple stages of compressor blades;
a combustor (1200) configured to mix and burn air compressed by the compressor with fuel; and
a turbine (1300) configured to generate power with gas burned by the combustor,
wherein at least one of the compressor blade (1110) and the compressor vane (1130) comprises an airfoil (2000_1 ~ 2000_4), wherein the airfoil comprises:
a suction surface (2400) having an outwardly convex curved surface;
a pressure surface (2300) disposed opposite the suction surface and having a curved surface concavely toward the suction surface;
a leading edge (2100) disposed upstream with respect to a direction of airflow and formed where front ends of the pressure surface and the suction surface are joined;
a trailing edge (2200) disposed downstream with respect to the direction of the airflow and formed where rear ends of the pressure surface and the suction surface are joined; and
at least one through hole (2500, 2500_2, 2500_3, 2500_4) extending through the airfoil (2000_1 ~ 2000_4) from the pressure surface to the suction surface.

10. The gas turbine of claim 9, wherein the through hole (2500, 2500_2, 2500_3, 2500_4) is a tip hole formed on an upper portion of the pressure surface or a hub hole formed on a lower portion of the pressure surface,
wherein the through hole has a linear form or a curved form.

11. The gas turbine of claim 9 or claim 10, wherein the through hole (2500, 2500_2, 2500_3, 2500_4) is formed in a diagonal direction having a preset angle relative to a tangential direction of the pressure surface, wherein the preset angle ranges from 10° to 60°.

12. The gas turbine of any one of claim 9 to claim 11, wherein the through hole (2500_2) is formed with a sectional area gradually decreases in a direction from the pressure surface to the suction surface.

13. The gas turbine of any one of claim 9 to claim 12, wherein the through hole comprises a first path (2530) that extends from an inlet of the through hole and terminating within the airfoil before reaching an outlet of the through hole, and a second path (2540) bending at and extending from an end of the first path to the outlet of the through hole.

14. The gas turbine of any one of claim 9 to claim 13, wherein the first path (2530) is formed in a diagonal direction having a first angle preset relative to the pressure surface, and the second path (2540) is formed in a diagonal direction having a second angle less than the first angle.

15. The gas turbine one of claim 9 to claim 14, wherein the through hole comprises a third path (2550) formed to connect an inlet (2501) of the through hole to a first outlet (2502a), and a fourth path (2560) branching from one position of the third path to a second outlet (2502b), wherein the second outlet (2502b) is formed closer to the trailing edge than the first outlet (2502a).
